# EUROPEAN PATENT APPLICATION

(11) **EP 2 878 469 A1**
(43) Date of publication of application: **03.06.2015**
(21) Application number: 13823601.3
(22) Date of filing: 05.07.2013
(51) Int. Cl.: B60J 1/02, G02F 1/1334

(54) **VEHICLE SAFETY REMINDING DEVICE AND VEHICLE SAFETY REMINDING METHOD**

(30) Priority: 26.07.2012 CN 201210262157
(71) Applicant: Saint-Gobain Glass France, 92400 Courbevoie (FR)
(72) Inventor: LI, Changle, Shanghai 200245 (CN)
(74) Representative: Ribeaudeau, Marion Christine
(86) International application number: PCT/CN2013/078874
(87) International publication number: WO 2014/015742

(57) **Abstract**

A vehicle safety warning device and a vehicle safety warning method are provided. The device is mounted on a vehicle, which includes: a sensor for obtaining current status information of the vehicle; a comparator, coupled to the sensor, for determining whether the current status information conforms to a safety requirement; a PDLC film disposed on a part of a windshield in front of a vehicle driving position; a power source coupled to the PDLC film; a switch coupled to the power source and the PDLC film, for controlling the power source to supply power to the PDLC film or not; and a controller for: when the current status information e conforms to the safety requirement, controlling the switch to close, or else, controlling the switch to open. When a vehicle safety issue arises, the user can be timely noticed and appropriate measures can be taken, thereby improving driving safety.

## Description

### CROSS-REFERENCE TO RELATED APPLICATIONS

This application claims priority to Chinese patent application No. 201210262157.2, filed on July 26, 2012, and entitled "VEHICLE SAFETY WARNING DEVICE AND VEHICLE SAFETY WARNING METHOD", the entire disclosure of which is incorporated herein by reference.

### FIELD OF THE DISCLOSURE

The present disclosure generally relates to vehicle safety technology, and more particularly, to a vehicle safety warning device and a vehicle safety warning method.

### BACKGROUND OF THE DISCLOSURE

When driving a vehicle, a driver can obtain current driving information, including speed, tyre pressure, oil volume, and the like, through gauges mounted in the vehicle. However, reading index on the gauges is a distraction for the driver, which may harm driving safety. Especially, in high speed driving, this potential safety risk may increase in geometric rate.

For example, speeding has become a major cause for traffic accidents. Even no accident occurs, once a vehicle runs too fast, it will be captured by a camera on a road side and there will be a corresponding penalty committed at last. In conventional techniques, information of speeding can be timely delivered to a user through an audio reminder, but it can't force the user to lower the vehicle speed in time to ensure driving safety.

Similarly, when there is no adequate oil left in the vehicle, it is necessary to remind the user and make sure that the user would get oil supply in time. When the tyre can't maintain enough pressure, it is necessary to remind the user and make sure that the user would pump up the tyre. In practice, there may be other safety related issues which should be timely reported to the user and requires corresponding measures to be taken to maintain driving safety.

Therefore, there is a need in the art to timely warn the user and to ensure driving safety.

### SUMMARY

Embodiments in the present disclosure provide a vehicle safety warning device and a vehicle safety warning method, which can warn a user in time and ensure driving safety for the user.

According to one embodiment, a vehicle safety warning device is provided, including:
a sensor, adapted for obtaining current status information of a vehicle;
a comparator coupled to the sensor, adapted for determining whether the current status information of the vehicle conforms to a corresponding safety requirement;
a polymer dispersed liquid crystal (PDLC) film disposed on a part of a windshield, where the part of the windshield is in front of a vehicle driving position;
a power source coupled to the PDLC film;
a switch coupled to the power source and the PDLC film, adapted for controlling the power source to supply power to the PDLC film or not; and
a controller coupled to the switch and the comparator, adapted for: when the current status information of the vehicle conforms to the corresponding safety requirement, controlling the switch to enable the power source to provide power to the PDLC film, or else, controlling the switch to enable the power source to stop providing power to the PDLC film.

Optionally, from inner side to outer side of the vehicle, the windshield successively includes a stack of a first glass substrate, a polyvinyl butyral film and a second glass substrate, where the PDLC film is disposed on a surface of the first glass substrate.

Optionally, from inner side to outer side of the vehicle, the windshield successively includes a stack of a first glass substrate, a polyvinyl butyral film and a second glass substrate, where the PDLC film is disposed on a surface of the second glass substrate, and is provided with a protective layer on its outer surface.

Optionally, from inner side to outer side of the vehicle, the windshield successively includes a stack of a first glass substrate, a first polyvinyl butyral film, a second polyvinyl butyral film and a second glass substrate, where the PDLC film is disposed between the first polyvinyl butyral film and the second polyvinyl butyral film.

Optionally, the power source is an alternating current power source, the vehicle includes a power supply for providing a direct current, and the vehicle safety warning device further includes a dc-ac converter for converting the direct current into an alternating current.

Optionally, the power source provides an operating voltage ranging from about 20 V to about 50 V.

Optionally, the power supply provides an operating voltage of 12 V, and the vehicle safety warning device further includes a transformer coupled to the power supply and the power source for changing voltage.

Optionally, the PDLC film has a thickness ranging from about 0.3 mm to about 2 mm.

Optionally, the PDLC film has a shape of a character, a graph, a symbol, or any combination thereof.

Optionally, the sensor includes a vehicle speed sensor, the status information includes vehicle speed information, the comparator includes a memory unit for storing a first threshold value, and the corresponding safety requirement includes the vehicle speed being less than or equal to the first threshold value.

Optionally, the sensor includes an oil volume sensor, the status information includes remaining oil volume, the comparator includes a memory unit for storing a second threshold value, and the corresponding safety requirement includes the remaining oil volume being greater than or equal to the second threshold value.

Optionally, the sensor includes a tyre pressure sensor, the status information includes tyre pressure, the comparator includes a memory unit for storing a third threshold value, and the corresponding safety requirement includes the tyre pressure being greater than or equal to the third threshold value.

Optionally, the vehicle safety warning device further includes: an audio player coupled to the comparator, adapted for playing an audio reminder when the current status information of the vehicle doesn't conform to the corresponding safety requirement.

According to one embodiment, a vehicle safety warning method is provided, the method includes:
disposing a polymer dispersed liquid crystal (PDLC) film on a part of a windshield, where the part of the windshield is in front of a driving position of a vehicle;
obtaining current status information of the vehicle; and
when the status information conforms to a corresponding safety requirement, applying a voltage to the PDLC film, such that the part of the windshield corresponding to the PDLC film presents a transparent appearance, or else, stopping applying the voltage to the PDLC film, such that the part of the windshield corresponding to the PDLC film presents a translucent or opaque appearance.

Optionally, the PDLC film has a thickness ranging from about 0.3 mm to about 2 mm.

Optionally, the PDLC film has a shape of a character, a graph, a symbol, or any combination thereof.

Optionally, the method further includes: when the status information doesn't conform to the corresponding safety requirement, playing a corresponding audio reminder.

Optionally, the PDLC film is disposed inside of the windshield or on a surface of the windshield.

Optionally, the voltage is an alternating voltage ranging from about 20 V to about 50 V.

Optionally, the vehicle includes a direct current power supply, and the voltage is provided by dc-ac converting and voltage changing of an output of the direct current power supply.

Optionally, the status information includes vehicle speed information, and the corresponding safety information includes the vehicle speed being less than or equal to a first threshold value.

Optionally, the status information includes remaining oil volume information, and the corresponding safety information includes the remaining oil volume being greater than or equal to a second threshold value.

Optionally, the status information includes tyre pressure information, and the corresponding safety information includes the tyre pressure being greater than or equal to a third threshold value.

Embodiments of the present disclosure have following advantages. A sensor and a comparator employed can determine whether a vehicle conforms to corresponding safety requirement(s). When the vehicle conforms to the safety requirement, by controlling a switch with a controller, a power source may provide power to a PDLC film, such that the PDLC film becomes transparent. As the PDLC film is disposed on a part of a windshield of the vehicle, which part is in front of a driving position, accordingly, the part of the windshield will become transparent when the PDLC film presents transparency. Therefore, a user can drive the vehicle without disturbance. When the vehicle doesn't conform to the corresponding safety requirement, by controlling the switch through the controller, the power source may stop providing power to the PDLC film, such that the PDLC film becomes translucent or opaque. As a result, the part of the windshield corresponding to the PDLC film becomes translucent or opaque. As such, the user can be timely aware of safety issues arising in the vehicle. Further, the part of the windshield won't turn transparent unless the vehicle conforms to the safety requirement again, which can force the user to take appropriate measures and thus ensure driving safety.

### BRIEF DESCRIPTION OF THE DRAWINGS

FIG. 1 schematically illustrates a block diagram of a vehicle safety warning device according to one embodiment of the present disclosure;
FIG. 2 schematically illustrates a block diagram of a vehicle safety warning device according to a first exemplary embodiment of the present disclosure;
FIG. 3 schematically illustrates a first structure of a PDLC film disposed on a windshield according to one embodiment of the present disclosure;
FIG. 4 schematically illustrates a second structure of a PDLC film disposed on a windshield according to one embodiment of the present disclosure;
FIG. 5 schematically illustrates a third structure of a PDLC film disposed on a windshield according to one embodiment of the present disclosure;
FIG. 6 schematically illustrates a block diagram of a vehicle safety warning device according to a second exemplary embodiment of the present disclosure;
FIG. 7 schematically illustrates a block diagram of a vehicle safety warning device according to a third exemplary embodiment of the present disclosure; and
FIG. 8 schematically illustrates a flow chart of a vehicle safety warning method according to one embodiment of the present disclosure.

### DETAILED DESCRIPTION OF THE DISCLOSURE

In order to clarify the objects, characteristics and advantages of the disclosure, embodiments of the disclosure will be interpreted in detail in combination with accompanied drawings.

Many details are disclosed in following description to provide better understanding for the present disclosure. However, the present disclosure may be implemented in other different embodiments. Therefore, the following detailed description does not limit the scope of the disclosure.

As described in background of the disclosure, using conventional techniques, a user can obtain information of vehicle safety issues (such as speeding, inadequate oil volume, low tyre pressure, and the like) through gauge check or audio reminding. However, those solutions can't force the user to take appropriate measures in time, which may still harm driving safety.

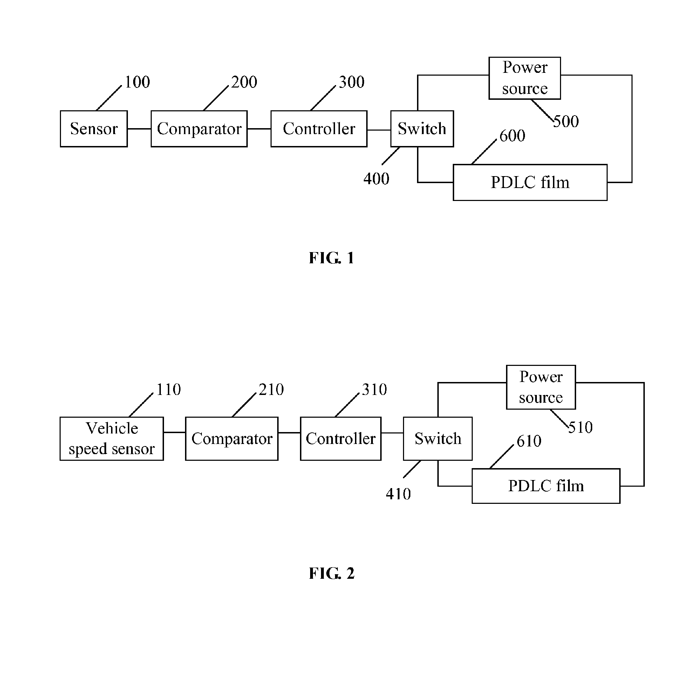

Accordingly, referring to FIG. 1, a vehicle safety warning device is provided according to one embodiment of the present disclosure. The vehicle safety warning device may include:
a sensor 100, adapted for obtaining current status information of a vehicle;
a comparator 200 coupled to the sensor 100, adapted for determining whether the current status information of the vehicle conforms to a corresponding safety requirement;
a polymer dispersed liquid crystal (PDLC) film 600 disposed on a part of a windshield, where the part of the windshield is in front of a vehicle driving position;
a power source 500 coupled to the PDLC film 600;
a switch 400 coupled to the power source 500 and the PDLC film 600, adapted for controlling the power source to supply power to the PDLC film or not; and
a controller 300 coupled to the switch 400 and the comparator 200, adapted for: when the current status information of the vehicle conforms to the corresponding safety requirement, controlling the switch 400 to enable the power source 500 to provide power to the PDLC film 600, or else, controlling the switch 400 to enable the power source 500 to stop providing power to the PDLC film 600.

The PDLC film 600 may be made by mixing prepolymers, nematic liquid crystals and spacer materials in a particular proportion, and disposing the mixture between two soft transparent conductive films. The working principle includes: when no electric field is applied, liquid crystal droplets may be randomly distributed in the polymer material and have irregular directors. In such occasion, the refractive index of the liquid crystals to ordinary lights mismatches with that of the polymer material, leading to a relatively strong scattering effect on the lights. That results in a translucent or opaque "milky white" appearance of the PDLC film. Under an electric field, the liquid crystal droplets may have directors arranged along a direction of the outer electric field due to positive dielectric anisotropic characteristic thereof. If the refractive index of the liquid crystals to ordinary lights matches with that of the polymer materials now, the lights can pass through the PDLC film and thus the PDLC film will have a transparent appearance.

The present disclosure fully applies working principles of the PDLC film described above. When there is a vehicle safety issue, the PDLC film disposed on a part of the windshield of the vehicle, which part is in front of a vehicle driving position (i.e., where a driver is seated), may be controlled to present a translucent or opaque appearance. As a result, the part of the windshield corresponding to the PDLC film may also turn translucent or opaque. As such, the user can be aware of the safety issue and is forced to take appropriate measures in time, so as to make the vehicle back to safe status. Accordingly, the windshield can return transparent. In this way, driving safety can be secured.

It should be noted that, to ensure that the driver can still drive the vehicle safely when the PDLC film presents a translucent or opaque appearance, the PDLC film should have a relatively small size and its position can't be exactly right against the driver's eyes.

Exemplary embodiments will be illustrated with reference to accompanying drawings.

### First exemplary embodiment

Referring to FIG. 2, a vehicle safety warning device for solving speeding issue is provided, including:
a vehicle speed sensor 110, adapted for obtaining current vehicle speed information of a vehicle;
a comparator 210 coupled to the vehicle speed sensor 110, adapted for determining whether the current speed of the vehicle is less than or equal to a first threshold value;
a polymer dispersed liquid crystal (PDLC) film 610 disposed on a part of a windshield, where the part of the windshield is in front of a vehicle driving position;
a power source 510 coupled to the PDLC film 610;
a switch 410 coupled to the power source 510 and the PDLC film 610, when the switch 410 is closed, the power source 510 provides power to the PDLC film 610, such that the PDLC film 610 presents a transparent appearance, when the switch 410 is opened, the power source 510 stops providing power to the PDLC film 610, such that the PDLC film 610 presents a translucent or opaque appearance; and
a controller 310 coupled to the switch 410 and the comparator 210, adapted for: when no speeding exists, controlling the switch 410 to be closed, or else, controlling the switch 410 to be opened.

In some embodiments, when the switch is opened, the power source may provide power to the PDLC film, and when the switch is closed, the power source may stop providing power to the PDLC film, which may not limit the scope of the present disclosure.

In some embodiments, the comparator 210 may include a memory unit (not shown in FIG. 2) for storing a first threshold value. The first threshold value may be any predetermined value, such as 80 km/h. The first threshold value may be set according to specific road condition information and may be modified at any time. When the current vehicle speed obtained by the vehicle speed sensor 110 is greater than the first threshold value, it could be determined that the vehicle is speeding. When the current vehicle speed obtained by the vehicle speed sensor 110 is less than or equal to the first threshold value, it could be determined that the vehicle conforms to a safety requirement corresponding to vehicle speed.

### The switch 410 may be a switch component of any type.

In some embodiment, the windshield may be a laminated glass, and the PDLC film 610 may be disposed inside of or on a surface of the part of the windshield in front of the driving position, which should not limit the scope of the invention.

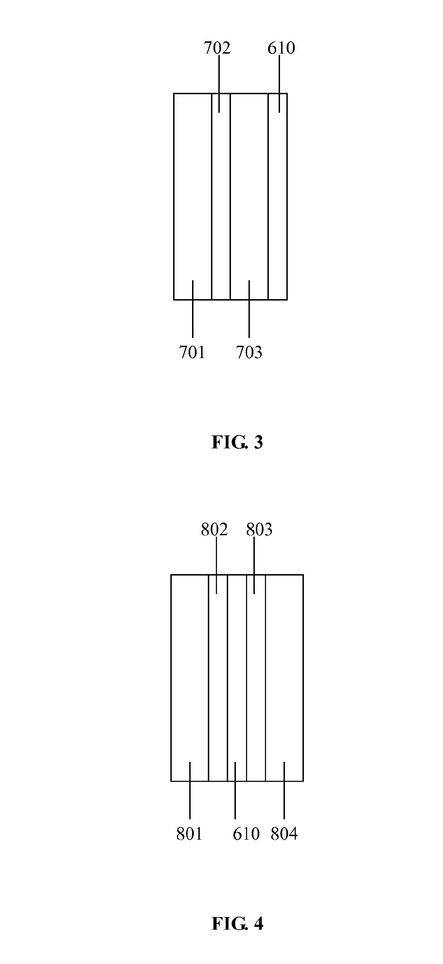

In a first specific example, referring to FIG. 3, from inner side to outer side of the vehicle, the windshield may successively include a first glass substrate 703, a polyvinyl butyral (PVB) film 702 and a second glass substrate 701 disposed as a stack, where the PDLC film 610 is attached to a surface of the first glass substrate 703.

In a second specific example, referring to FIG. 4, from inner side to outer side of the vehicle, the windshield may successively include a first glass substrate 804, a first PVB film 803, a second PVB film 802 and a second glass substrate 801 disposed as a stack, where the PDLC film 610 is disposed between the first PVB film 803 and the second PVB film 802.

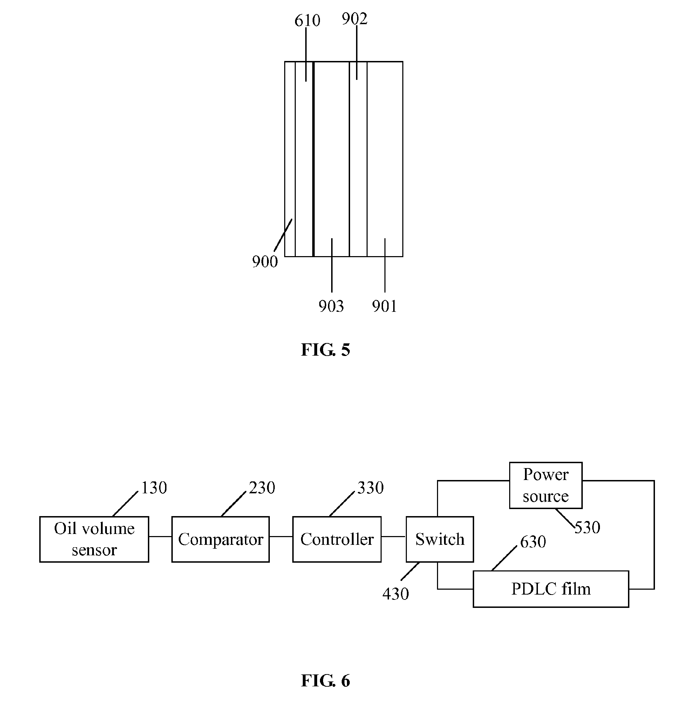

In a third specific example, referring to FIG. 5, from inner side to outer side of the vehicle, the windshield may successively include a first glass substrate 901, a polyvinyl butyral (PVB) film 902 and a second glass substrate 903 disposed as a stack, where the PDLC film 610 is attached to a surface of the second glass substrate 903. Furthermore, an outer surface of the PDLC film 610 may be provided with a protective layer 900. The protective layer 900 may be a water proof film for protecting the PDLC film 610 from rain or vehicle washing water. In some embodiments, the PDLC film 610 may be disposed at a position can't be touched by windshield wipers to avoid damages by wipers.

Specific structures and manufacturing techniques of the PDLC film 610 are well known in the art and thus are not illustrated in detail here.

In some embodiments, the PDLC film 610 may have a thickness ranging from 0.3 mm to about 2 mm, for example, the thickness may be 0.3 mm, 0.7 mm, 1.0 mm, 1.5 mm or 2.0 mm.

In some embodiments, the vehicle may include a power supply for providing direct current, while the power source 510 may be an alternating current power source adapted to provide alternating current for the PDLC film 610. Therefore, in some embodiments, the vehicle safety warning device may further include a dc-ac converter (not shown in FIG. 2) coupled to the power source 510 and the power supply, which is used to convert the direct current provided by the power supply into an alternating current.

The PDLC film 610 needs a driving voltage, i.e., a working voltage provided by the power source 510 to maintain a transparent appearance. The driving voltage is relative to dielectric index of the polymer and liquid crystal in the PDLC film 610, which is well known in the art and is illustrated in detail here.

Specifically, in some embodiments, the power source 510 may provide an alternating current with a working voltage ranging from about 20 V to about 50 V, for example, the working voltage may be 20 V, 30 V, 40 V, 50 V, or the like.

In practice, the power supply of the vehicle generally provides a working voltage of 12 V. When the working voltage provided by the power supply isn't equal to the required voltage of the power source, in some embodiments, the vehicle safety warning device may further include a transformer (not shown in FIG. 2) coupled to the power source 510 and the power supply, which is adapted to change the voltage.

In some embodiments, the PDLC film 610 may have a shape of a character, a graph, a symbol, or any combination thereof. For example, the PDLC film 610 may present two words "slow down", a graph corresponding to a slow sign, a symbol like "!", or the like, which should not limit the scope of the present disclosure.

When driving a vehicle, the driver shall stare at the windshield in front of his/her vision field. Therefore, the PDLC film 610 shall be disposed on a part of the windshield which is in front of the driving position. When the PDLC film 610 turns translucent or opaque, the size and position of the PDLC film 610 should meet the requirement that not only the driver can recognize the corresponding information easily, but also the driving safety is not affected. Therefore, regarding different types of vehicles, the PDLC film 610 may be configured to have different sizes and positions.

In some embodiments, the vehicle safety warning device may further include an audio player (not shown in FIG. 2) coupled to the controller 310, which is adapted for playing an audio reminder when the vehicle is speeding. For example, when the controller 310 determines that the vehicle is speeding, the audio player may present an audio reminder, such as "the vehicle is speeding, please slow down", or the like. As such, even if the user is not familiar with the function of the PDLC film 610, he/she can find a solution as soon as possible when the PDLC film turns to translucent or opaque.

In some embodiments, the vehicle safety warning device for the safety issue of speeding may work as follows:

(1) When the vehicle is running, the vehicle speed sensor 110 detects the current vehicle speed and sends the detected current vehicle speed to the comparator 210.

(2) After obtaining the vehicle speed sent from the vehicle speed sensor 110, the comparator 210 compares the vehicle speed with the first threshold value and sends the comparison result to the controller 310.

(3) When the vehicle speed is less than or equal to the first threshold value, the controller 310 determines the vehicle is not speeding at the present time point and accordingly controls the switch 410 to be closed. Thus the power source 510 provides power to the PDLC film 610, so that the PDLC film 610 presents a transparent appearance. In such occasion, the user can drive the vehicle as usual. When the vehicle speed is greater than the first threshold value, the controller 310 determines the vehicle is speeding now and accordingly controls the switch 410 to be opened. Thus the power source 510 stops providing power to the PDLC film 610, so that the PDLC film 610 presents a translucent or opaque appearance. Further, the audio player plays a corresponding audio reminder. In such occasion, the user should timely lower the speed to let it be less than or equal to the first threshold value, such that the above described detection, comparison and controlling steps may be repeated to make the PDLC film 610 turn transparent again.

In embodiments of the present disclosure, the user can be timely aware that the vehicle is speeding based on a change of the part of the windshield in front of the driving position. Besides, when the part of the windshield becomes translucent or opaque, it would not harm the driving safety but may partially impact the user's driving experience, which forces the user to timely lower the speed to let the vehicle conform the safety requirement again. In this way, the part of the windshield can return transparent. Therefore, speeding may be impeded and thus driving safety may be improved.

### Second exemplary embodiment

Referring to FIG. 6, a vehicle safety warning device aiming to solve oil issue is provided, including:
an oil volume sensor 130, adapted for obtaining current remaining oil volume information of a vehicle;
a comparator 230 coupled to the oil volume sensor 130, adapted for determining whether the current oil volume of the vehicle is greater than or equal to a second threshold value;
a polymer dispersed liquid crystal (PDLC) film 630 disposed on a part of a windshield, where the part of the windshield is in front of a vehicle driving position;
a power source 530 coupled to the PDLC film 630;
a switch 430 coupled to the power source 530 and the PDLC film 630, when the switch 430 is closed, the power source 530 provides power to the PDLC film 630, such that the PDLC film 630 presents a transparent appearance, when the switch 430 is opened, the power source 530 stops providing power to the PDLC film 630, such that the PDLC film 630 presents a translucent or opaque appearance; and
a controller 330 coupled to the switch 430 and the comparator 230, adapted for: when there is no need to add oil, controlling the switch 430 to be closed, or else, controlling the switch 430 to be opened.

Compared with the first exemplary embodiment, the sensor in the second exemplary embodiment is an oil volume sensor 130, and the vehicle status information obtained by the oil volume sensor 130 is remaining oil volume information. Further, the comparator 230 may includes a memory unit (not shown in FIG. 6) for storing a second threshold value, and the corresponding safety requirement is the remaining oil volume being greater than or equal to the second threshold value. Other detail information of the device of the second exemplary embodiment may be obtained by referring the first exemplary embodiment, which may not be illustrated here.

The second threshold value may be any predetermined value. For example, the second threshold value may be 20 L, or the like, which may not limit the scope of the present disclosure.

It should be noted that, when there is a need to add oil for the vehicle, the user can't take corresponding measures just as immediately as dealing with the speeding issue. The user may need to drive the vehicle to a service station. Therefore, in some embodiments, the PDLC film 630 may have a smaller size and a position more deviating from the direct vision of the user, so as to secure driving safety.

The PDLC film 630 in the second exemplary embodiment may have a shape differing from that in the first exemplary embodiment, for example, words like "add oil", etc.

In some embodiments, the vehicle safety warning device aiming to solve the safety issue of oil insufficient may work as follows:

(1) When the vehicle is running, the oil volume sensor 130 detects the current remaining oil volume and sends the detected current remaining oil volume to the comparator 230.

(2) After obtaining the remaining oil volume sent from the oil volume sensor 130, the comparator 230 compares the remaining oil volume with the second threshold value and sends the comparison result to the controller 330.

(3) When the remaining oil volume is greater than the second threshold value, the controller 330 determines that there is no need to add oil for the vehicle at the present time point and accordingly controls the switch 430 to be closed. Thus the power source 530 provides power to the PDLC film 630, so that the PDLC film 630 presents a transparent appearance. In such occasion, the user can drive the vehicle as usual. When the remaining oil volume is less than or equal to the second threshold value, the controller 330 determines that there is a need to add oil for the vehicle now and accordingly controls the switch 430 to be opened. Thus the power source 530 stops providing power to the PDLC film 630, so that the PDLC film 630 presents a translucent or opaque appearance. Further, the audio player plays a corresponding audio reminder. In such occasion, the user should timely add oil for the vehicle to let the remaining oil volume to be greater than the second threshold value, such that the above described detection, comparison and controlling steps may be repeated to make the PDLC film 630 turn transparent again.

In embodiments of the present disclosure, the user can be timely aware that the vehicle needs oil supplement based on a change of the part of the windshield in front of the driving position. Besides, when the part of the windshield becomes translucent or opaque, it would not harm the driving safety but may partially impact the user's driving experience, which forces the user to add oil for the vehicle to let the vehicle conform the safety requirement again. In this way, the part of the windshield may return transparent. Therefore, driving safety and user experience may be improved.

### Third exemplary embodiment

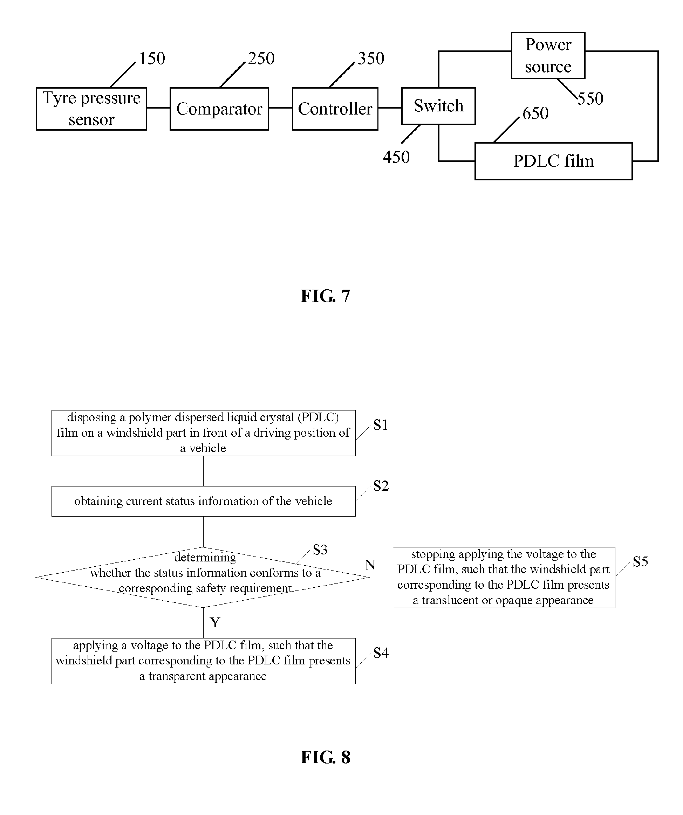

Referring to FIG. 7, a vehicle safety warning device aiming to solve tyre pressure issue is provided, including:
a tyre pressure sensor 150, adapted for obtaining current tyre pressure information of a vehicle;
a comparator 250 coupled to the tyre pressure sensor 150, adapted for determining whether the current tyre pressure of the vehicle is greater than or equal to a third threshold value;
a polymer dispersed liquid crystal (PDLC) film 650 disposed on a part of a windshield, where the part of the windshield is in front of a vehicle driving position;
a power source 550 coupled to the PDLC film 650;
a switch 450 coupled to the power source 550 and the PDLC film 650, when the switch 450 is closed, the power source 550 provides power to the PDLC film 650, such that the PDLC film 650 presents a transparent appearance, when the switch 450 is opened, the power source 550 stops providing power to the PDLC film 650, such that the PDLC film 650 presents a translucent or opaque appearance; and
a controller 350 coupled to the switch 450 and the comparator 250, adapted for: when there is no need to pump up the tyre, controlling the switch 450 to be closed, or else, controlling the switch 450 to be opened.

Compared with the first exemplary embodiment, the sensor in the third exemplary embodiment is the tyre pressure sensor 150, and the vehicle status information obtained by the tyre pressure sensor 150 is tyre pressure information. Further, the comparator 250 may includes a memory unit (not shown in FIG. 7) for storing a third threshold value, and the corresponding safety requirement is the tyre pressure being greater than or equal to the third threshold value. Other detail information of the device of the third exemplary embodiment may be obtained by referring the first exemplary embodiment, which is not illustrated here.

The third threshold value may be any predetermined value. For example, the third threshold value may be 2.3 bar, or the like, which may not limit the scope of the present disclosure.

It should be noted that, when there is a need to pump up the tyre for the vehicle, the user can't take corresponding measures just as immediately as dealing with the speeding issue. The user may need to drive the vehicle to a 4S store or a garage. Therefore, in some embodiments, the PDLC film 650 may have a smaller size and a position more deviating from the direct vision of the user, so as to secure driving safety.

The PDLC film 650 in the third exemplary embodiment may have a shape differing from that in the first exemplary embodiment, for example, words like "pump up the tyre", etc.

In some embodiments, the vehicle safety warning device aiming to solve the safety issue of tyre pressure insufficient may work as follows:

(1) When the vehicle is running, the tyre pressure sensor 150 detects the current tyre pressure and sends the detected current tyre pressure to the comparator 250.

(2) After obtaining the tyre pressure sent from the tyre pressure sensor 150, the comparator 250 compares the tyre pressure with the third threshold value and sends the comparison result to the controller 350.

(3) When the tyre pressure is greater than the third threshold value, the controller 350 determines that there is no need to pump up the tyre for the vehicle at the present time point and accordingly controls the switch 450 to be closed. Thus the power source 550 provides power to the PDLC film 650, so that the PDLC film 650 presents a transparent appearance. In such occasion, the user can drive the vehicle as usual. When the tyre pressure is less than or equal to the third threshold value, the controller 350 determines that there is a need to pump up the tyre for the vehicle now and accordingly controls the switch 450 to be opened. Thus the power source 550 stops providing power to the PDLC film 650, so that the PDLC film 650 presents a translucent or opaque appearance. Further, the audio player plays a corresponding audio reminder. In such occasion, the user should timely pump up the tyre for the vehicle to let the tyre pressure to be greater than the third threshold value, such that the above described detection, comparison and controlling steps may be repeated to make the PDLC film 650 turn transparent again.

In embodiments of the present disclosure, the user can be timely aware that the vehicle needs tyre pumping up based on a change of the part of the windshield in front of the driving position. Besides, when the part of the windshield becomes translucent or opaque, it would not harm the driving safety but may partially impact the user's driving experience, which forces the user to pump up the tyre for the vehicle to let the vehicle conform the safety requirement again. In this way, the part of the windshield may return transparent. Therefore, driving safety and user experience may be improved.

Accordingly, referring to FIG. 8, a vehicle safety warning method is provided according to one embodiment, including:
Step S1: disposing a polymer dispersed liquid crystal (PDLC) film on a part of a windshield in front of a driving position of a vehicle;
Step S2: obtaining current status information of the vehicle;
Step S3: determining whether the status information conforms to a corresponding safety requirement;
Step S4: if yes, applying a voltage to the PDLC film, such that the part of the windshield corresponding to the PDLC film presents a transparent appearance; and
Step S5: if no, stopping applying the voltage to the PDLC film, such that the part of the windshield corresponding to the PDLC film presents a translucent or opaque appearance.

In some embodiments, the PDLC film may be disposed inside of or on a surface of the part of the windshield, have a thickness ranging from about 0.3 mm to about 2 mm, and have a shape of a character, a graph, a symbol, or any combination thereof.

In some embodiments, the voltage applied to the PDLC film may be an alternating voltage ranging from about 20 V to about 50 V. Specifically, the vehicle may have a direct current power supply, and the voltage may be provided by dc-ac converting and voltage changing of an output of the direct current power supply.

In a first specific example, the status information may include vehicle speed information, and the corresponding safety requirement may be the vehicle speed being less than or equal to a first threshold value.

In a second specific example, the status information may include remaining oil volume information, and the corresponding safety information may be the remaining oil volume being greater than or equal to a second threshold value.

In a third specific example, the status information may include tyre pressure information, and the corresponding safety information may be the tyre pressure being greater than or equal to a third threshold value.

In some embodiments, when the status information doesn't conform to the corresponding safety requirement, a corresponding audio reminder may be played.

The vehicle safety warning method may be implemented using the vehicle safety warning devices described above, which may not be illustrated in detail here.

The vehicle safety warning method also can timely remind the user of a vehicle safety issue arising, and force the user to take corresponding measures. Such that, the vehicle may return to a safe status, which will make the windshield to return transparent again. Therefore, driving safety may be improved.

Although the present disclosure has been disclosed as above with reference to preferred embodiments thereof but will not be limited thereto. Those skilled in the art can modify and vary the embodiments without departing from the spirit and scope of the present disclosure. Accordingly, without departing from the scope of the present invented technology scheme, whatever simple modification and equivalent variation belong to the protection range of the present invented technology scheme.

## Claims

1. A vehicle safety warning device, mounted on a vehicle, comprising:
a sensor, adapted for obtaining current status information of the vehicle;
a comparator coupled to the sensor, adapted for determining whether the current status information of the vehicle conforms to a corresponding safety requirement;
a polymer dispersed liquid crystal (PDLC) film disposed on a part of a windshield, where the part of the windshield is in front of a vehicle driving position;
a power source coupled to the PDLC film;
a switch coupled to the power source and the PDLC film, adapted for controlling the power source to supply power to the PDLC film or not; and
a controller coupled to the switch and the comparator, adapted for: when the current status information of the vehicle conforms to the corresponding safety requirement, controlling the switch to enable the power source to provide power to the PDLC film, or else, controlling the switch to enable the power source to stop providing power to the PDLC film.

2. The vehicle safety warning device according to claim 1, wherein the windshield successively comprises, from inner side to outer side of the vehicle, a stack of a first glass substrate, a polyvinyl butyral film and a second glass substrate, where the PDLC film is disposed on a surface of the first glass substrate.

3. The vehicle safety warning device according to claim 1, wherein the windshield successively comprises, from inner side to outer side of the vehicle, a stack of a first glass substrate, a polyvinyl butyral film and a second glass substrate, where the PDLC film is disposed on a surface of the second glass substrate, and is provided with a protective layer on an outer surface thereof.

4. The vehicle safety warning device according to claim 1, wherein the windshield successively comprises, from inner side to outer side of the vehicle, a stack of a first glass substrate, a first polyvinyl butyral film, a second polyvinyl butyral film and a second glass substrate, where the PDLC film is disposed between the first polyvinyl butyral film and the second polyvinyl butyral film.

5. The vehicle safety warning device according to claim 1, wherein the power source is an alternating current power source, the vehicle comprises a power supply for providing a direct current, and the vehicle safety warning device further comprises a dc-ac converter for converting the direct current into an alternating current.

6. The vehicle safety warning device according to claim 5, wherein the power source provides an operating voltage ranging from about 20 V to about 50 V.

7. The vehicle safety warning device according to claim 6, wherein the power supply provides an operating voltage of 12 V, and the vehicle safety warning device further comprises a transformer coupled to the power supply and the power source for changing voltage.

8. The vehicle safety warning device according to claim 1, wherein the PDLC film has a thickness ranging from about 0.3 mm to about 2 mm.

9. The vehicle safety warning device according to claim 1, wherein the PDLC film has a shape of a character, a graph, a symbol, or any combination thereof.

10. The vehicle safety warning device according to claim 1, wherein the sensor comprises a vehicle speed sensor, the status information comprises vehicle speed information, the comparator comprises a memory unit for storing a first threshold value, and the corresponding safety requirement comprises the vehicle speed being less than or equal to the first threshold value.

11. The vehicle safety warning device according to claim 1, wherein the sensor comprises an oil volume sensor, the status information comprises remaining oil volume, the comparator comprises a memory unit for storing a second threshold value, and the corresponding safety requirement comprises the remaining oil volume being greater than or equal to the second threshold value.

12. The vehicle safety warning device according to claim 1, wherein the sensor comprises a tyre pressure sensor, the status information comprises tyre pressure, the comparator comprises a memory unit for storing a third threshold value, and the corresponding safety requirement comprises the tyre pressure being greater than or equal to the third threshold value.

13. The vehicle safety warning device according to claim 1, further comprising: an audio player coupled to the comparator, adapted to play an audio reminder when the current status information of the vehicle doesn't conform to the corresponding safety requirement.

14. A vehicle safety warning method, comprising:
disposing a polymer dispersed liquid crystal (PDLC) film on a part of a windshield, where the part of the windshield is in front of a driving position of a vehicle;
obtaining current status information of the vehicle; and
when the status information conforms to a corresponding safety requirement, applying a voltage to the PDLC film, such that the part of the windshield corresponding to the PDLC film presents a transparent appearance, or else, stopping applying the voltage to the PDLC film, such that the part of the windshield corresponding to the PDLC film presents a translucent or opaque appearance.

15. The vehicle safety warning method according to claim 14, wherein the PDLC film has a thickness ranging from about 0.3 mm to about 2 mm.

16. The vehicle safety warning method according to claim 14, wherein the PDLC film has a shape of a character, a graph, a symbol, or any combination thereof.

17. The vehicle safety warning method according to claim 14, further comprising: when the status information doesn't conform to the corresponding safety requirement, playing a corresponding audio reminder.

18. The vehicle safety warning method according to claim 14, wherein the PDLC film is disposed inside of the windshield or on a surface of the windshield.

19. The vehicle safety warning method according to claim 14, wherein the voltage is an alternating voltage ranging from about 20 V to about 50 V.

20. The vehicle safety warning method according to claim 19, wherein the vehicle comprises a direct current power supply, and the voltage is provided by dc-ac converting and voltage changing of an output of the direct current power supply.

21. The vehicle safety warning method according to claim 14, wherein the status information comprises vehicle speed information, and the corresponding safety information comprises the vehicle speed being less than or equal to a first threshold value.

22. The vehicle safety warning method according to claim 14, wherein the status information comprises remaining oil volume information, and the corresponding safety information comprises the remaining oil volume being greater than or equal to a second threshold value.

23. The vehicle safety warning method according to claim 14, wherein the status information comprises tyre pressure information, and the corresponding safety information comprises the tyre pressure being greater than or equal to a third threshold value.
